# EUROPÄISCHE PATENTSCHRIFT

(11) **EP 4 098 827 B1**
(45) Veröffentlichungstag und Bekanntmachung des Hinweises auf die Patenterteilung: **10.04.2024**
(21) Anmeldenummer: 21177136.5
(22) Anmeldetag: 01.06.2021
(51) Int. Cl.: E05B 17/20, E05B 63/00, E05B 83/42, E05C 9/02, B64C 1/14

(54) **SICHERUNGSMECHANISMUS ZUR SICHERUNG EINER FAHRZEUGTÜR**
SECURING MECHANISM FOR SECURING A VEHICLE DOOR
MÉCANISME DE SÉCURISATION PERMETTANT DE SÉCURISER UNE PORTE DE VÉHICULE

(43) Veröffentlichungstag der Anmeldung: 07.12.2022
(73) Patentinhaber: Airbus Operations GmbH, 21129 Hamburg (DE)
(72) Erfinder: Martin, Alexander, 21129 Hamburg (DE)
(74) Vertreter: Schicker, Silvia

(56) Entgegenhaltungen:
- DE-A1- 10 020 825
- US-B1- 6 318 135

## Beschreibung

Die Erfindung betrifft ein Türsystem mit einem Sicherungsmechanismus. Ferner wird ein Fahrzeug bereitgestellt, das das Türsystem umfasst. Das Fahrzeug kann ein Luftfahrzeug sein, insbesondere ein Flugzeug.

Fahrzeugtüren dienen dem Zweck, in einer Schließstellung eine Öffnung in einem Fahrzeug zu bedecken und zu verschließen und dabei einen Fahrzeuginnenraum gegenüber der Fahrzeugumgebung abzuschotten. Bei bestimmten Fahrzeugtypen müssen Sicherheitsstandards eingehalten werden. Beispielsweise ist es für Flugzeugtüren erforderlich, dass diese sowohl am Boden als auch im Flugbetrieb sicher den Flugzeuginnenraum verschließen. Dabei muss die Tür auch während eines vorherrschenden Druckunterschieds zwischen dem Flugzeuginnenraum und der Flugzeugumgebung sicher verschlossen sein. Andererseits müssen sich die Türen im Notfall leicht und schnell öffnen lassen.

Um ein ungewünschtes Öffnen derartiger Türen zum Beispiel während eines Flugbetriebs zu verhindern, kommen üblicherweise Verriegelungssysteme zum Einsatz. Diese sind dazu eingerichtet, die Fahrzeugtür in einer Schließstellung zu verriegeln. Für Flugzeugtüren ist üblicherweise ein sogenannter "Flight Lock Actuator" (FLA) vorgesehen, der das Verriegelungssystem während eines Flugbetriebs des Flugzeugs blockiert. So soll ein manuelles Öffnen der Flugzeugtür während des Flugs bzw. während der Fahrt auf dem Flughafen unterbunden werden.

Bei bekannten Sicherungsmechanismen zum Sichern von Flugzeugtüren ist der FLA in der Tür verbaut. Beim Einbauen der Tür in das Fahrzeug muss dann eine Kabelverbindung zwischen dem Flugzeug und dem FLA bereitgestellt werden. Ferner ist der FLA bei bekannten Lösungen in einem Kupplungsgehäuse zusammen mit einem Teil des Verriegelungssystems angeordnet. Auch wird bei einer Aktuierung des FLA zwischen einem aktuatorbewegten Teil des FLA und einem zu blockierenden Teil des Verriegelungssystems üblicherweise eine vollständig bzw. mehrdimensional formschlüssige Verbindung gebildet. All dies hat einen relativ hohen Montageaufwand und somit hohe Fertigungskosten zur Folge. Bei einigen bekannten FLA-Systemen kann es im Bereich der formschlüssigen Verbindung zu Materialverschleiß kommen.

Aus dem Dokument US 6,318,135 B1 ist ein Sicherungsmechanismus bekannt, der eine Heckklappe eines Lastkraftwagens in einer oberen Position blockieren soll. Mittels eines Schlüssels kann ein Blockierarm aus einer ersten in eine zweite Position rotiert werden. In der ersten Position blockiert der Blockierarm eine Bewegung eines Gestänges, sodass die Heckklappe blockiert bleibt. In der zweiten Position gibt der Blockierarm das Gestänge frei, sodass die Heckklappe herunterbewegt werden kann. Das Dokument DE 100 20 825 A1 beschreibt eine Vorrichtung zum Schließen einer Flugzeugtür. Ein die Verriegelungslage der Tür haltender Verriegelungsmechanismus wird mittels eines Sicherungsmechanismus gesichert, der infolge einer verzögerten Bewegung eines Bewegungsmechanismus durch einen Antrieb ausgelöst wird.

Die Erfindung ist auf die Aufgabe gerichtet, ein vorteilhaftes Türsystem bereitzustellen.

Erfindungsgemäß wird ein Türsystem mit den Merkmalen des Anspruchs 1 bereitgestellt, sowie ein Fahrzeug gemäß Anspruch 13.

Ein Sicherungsmechanismus wird zur Sicherung einer Fahrzeugtür bereitgestellt. Der Sicherungsmechanismus umfasst ein Verriegelungssystem, welches ein Verriegelungselement umfasst und dazu eingerichtet ist, in einer Verriegelungsstellung des Verriegelungselements die Fahrzeugtür in einer Schließstellung zu verriegeln und in einer Entriegelungsstellung des Verriegelungselements die Fahrzeugtür zu entriegeln. Der Sicherungsmechanismus umfasst ferner ein Sicherungselement, welches dazu eingerichtet ist, in einer Sicherungsstellung eine Bewegung des Verriegelungselements von der Verriegelungsstellung in die Entriegelungsstellung in einer ersten Richtung zu blockieren, und in einer Freigabestellung die Bewegung des Verriegelungselements von der Verriegelungsstellung in die Entriegelungsstellung in der ersten Richtung freizugeben. Der Sicherungsmechanismus umfasst einen Aktuator, der dazu eingerichtet ist, das Sicherungselement aus der Freigabestellung in die Sicherungsstellung oder/und aus der Sicherungsstellung in die Freigabestellung zu bewegen. Das Sicherungselement ist ferner dazu eingerichtet, in der Sicherungsstellung eine Bewegung des Verriegelungselements in einer zweiten Richtung freizugeben. Die zweite Richtung kann sich von der der ersten Richtung unterscheiden. Beispielsweise ist die zweite Richtung der ersten Richtung entgegengesetzt.

Das Sicherungselement kann dazu eingerichtet sein, in der Sicherungsstellung bei der Bewegung des Verriegelungselements von der Verriegelungsstellung in die Entriegelungsstellung mit dem Verriegelungselement in Kontakt zu treten, und mittels des Kontakts zwischen dem Sicherungselement und dem Verriegelungselement die Bewegung des Verriegelungselements von der Verriegelungsstellung in die Entriegelungsstellung zu blockieren.

Beispielsweise ist der Sicherungsmechanismus derart ausgelegt, dass bei dem Kontakt zwischen dem Sicherungselement und dem Verriegelungselement eine in nur der ersten Richtung formschlüssige Verbindung zwischen dem Sicherungselement und dem Verriegelungselement gebildet wird.

Der Sicherungsmechanismus kann derart ausgelegt sein, dass das Sicherungselement in der Sicherungsstellung bei dem Kontakt mit dem Verriegelungselement ein Auflager für das Verriegelungselement bereitstellt, wobei das Auflager die Blockierung der Bewegung des Verriegelungselements von der Verriegelungsstellung in die Entriegelungsstellung bewirkt. Das Auflager kann ein Loslager sein. Das Auflager ist beispielsweise im Wesentlichen linien- oder punktförmig.

Der Sicherungsmechanismus kann derart eingerichtet sein, dass das Sicherungselement in der Sicherungsstellung von dem Verriegelungselement beabstandet ist, wenn sich das Verriegelungselement in der Verriegelungsstellung befindet.

Der Sicherungsmechanismus kann derart eingerichtet sein, dass die Bewegung des Verriegelungselements von der Verriegelungsstellung in die Entriegelungsstellung eine Translation des Verriegelungselements entlang einer ersten Achse umfasst oder ist.

Beispielsweise ist der Sicherungsmechanismus derart eingerichtet, dass eine Bewegung des Sicherungselements aus der Freigabestellung in die Sicherungsstellung eine Rotation des Sicherungselements um eine zweite Achse umfasst oder ist.

Die erste Achse kann gegenüber der zweiten Achse schräg verlaufen.

Der Sicherungsmechanismus kann derart eingerichtet sein, dass das Auflager gegenüber der zweiten Achse in einer dritten Richtung beabstandet ist, wobei die dritte Richtung gegenüber der ersten Achse oder/und der zweiten Achse schräg verläuft.

Beispielsweise ist der Sicherungsmechanismus derart eingerichtet, dass die erste Richtung gegenüber der ersten Achse unter einem Winkel verläuft, und dass das Sicherungselement bei der Rotation um die zweite Achse im Wesentlichen um den Winkel rotiert.

Erfindungsgemäß wird ein Türsystem bereitgestellt, welches eine Fahrzeugtür, einen Türrahmen und den Sicherungsmechanismus umfasst. Hierbei ist das Verriegelungssystem an der Tür angeordnet, und der Aktuator und das Sicherungselement sind an dem Türrahmen angeordnet. Das Sicherungselement kann über den Aktuator mit dem Türrahmen verbunden sein.

Ein Fahrzeug wird bereitgestellt, welches das Türsystem umfasst. Das Fahrzeug kann ein Luftfahrzeug sein, insbesondere ein Flugzeug.

Bevorzugte Ausführungsformen der Erfindung werden nun anhand der beigefügten schematischen Zeichnungen erläutert, wobei
- Fig. 1: eine schematische Darstellung eines Sicherungsmechanismus mit einem Sicherungselement in einer Sicherungsstellung zeigt,
- Fig. 2: eine schematische Darstellung des Sicherungsmechanismus mit dem Sicherungselement in einer Freigabestellung zeigt,
- Fig. 3: eine schematische Darstellung eines Türsystems mit dem Sicherungsmechanismus zeigt,
- Fig. 4: eine schematische Darstellung des Türsystems in einem ersten Zustand zeigt,
- Fig. 5: eine schematische Darstellung des Türsystems in einem zweiten Zustand zeigt, und
- Fig. 6: eine schematische Darstellung eines Flugzeugs zeigt.

Im Folgenden bezeichnen dieselben Bezugszeichen dieselben funktionellen oder konstruktiven Merkmale.

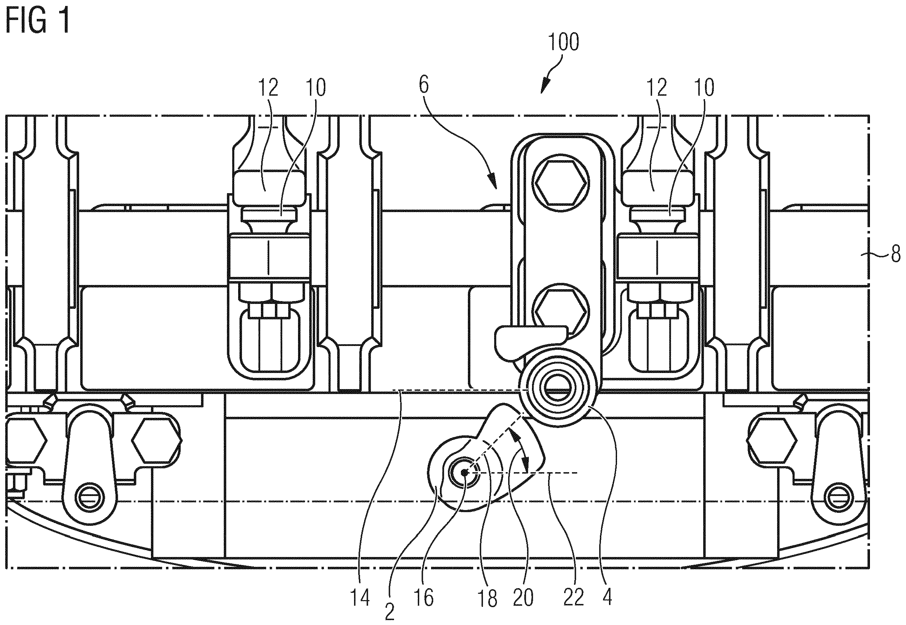

Fig. 1 zeigt eine schematische Darstellung eines Sicherungsmechanismus 100 für eine Fahrzeugtür. Der Sicherheitsmechanismus 100 umfasst ein Sicherungselement 2, welches sich in Fig. 1 in einer Sicherungsstellung befindet. Das Sicherungselement 2 dient in dieser Stellung dazu, eine Translation des Verriegelungselements 4 des Verriegelungssystems 6 in einer ersten Richtung (in Fig. 1 nach links hin) zu blockieren. Jedoch gestattet das Sicherungselement 2 in der Sicherungsstellung eine Bewegung des Verriegelungselements 4 in einer zweiten Richtung, die sich von der ersten Richtung unterscheidet. So kann sich das Verriegelungselement 4 beispielsweise in Fig. 1 nach rechts hin bewegen, obwohl sich das Sicherungselement 2 in der Sicherungsstellung befindet.

In Fig. 1 befindet sich das Verriegelungselement 4 in einer Verriegelungsstellung, in der das Verriegelungssystem 6 die Fahrzeugtür verriegelt. In dem gezeigten Beispiel umfasst das Verriegelungssystem 6 eine Welle 8 an dem das Verriegelungselement 4 befestigt ist. An der Welle 8 sind ferner Verschlusselemente 10 befestigt, welche mit Verschlussgegenstücken 12 zusammenwirken können, um die Fahrzeugtür zu verriegeln. Aus der in Fig. 1 dargestellten Verriegelungsstellung des Verriegelungselements 4 müsste dieses, um die Entriegelung der Fahrzeugtür zu ermöglichen, zusammen mit den Verschlusselementen 10 nach links hin in eine Entriegelungsstellung verschoben werden. Diese Entriegelungsbewegung wird von dem Sicherungselement 2 in der Sicherungsstellung blockiert.

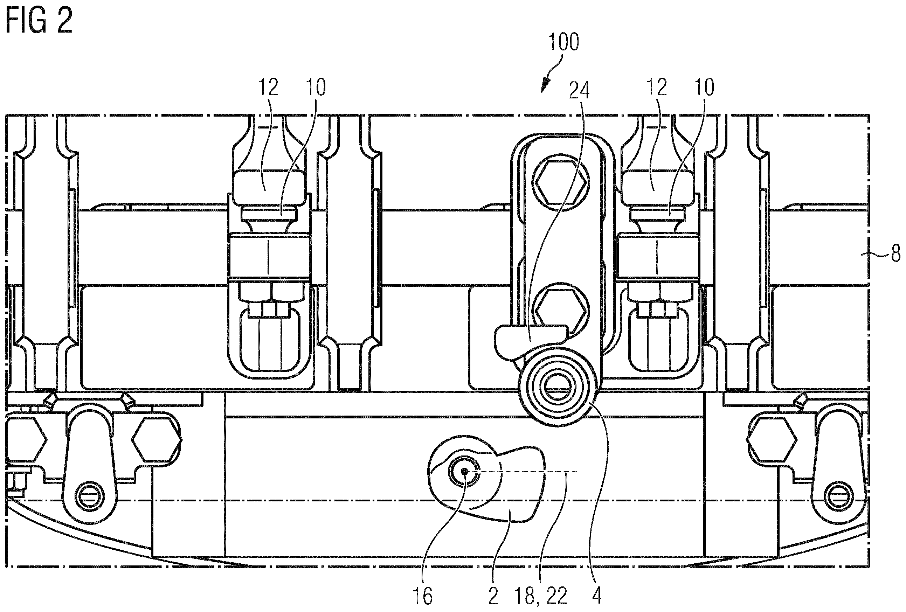

Die translatorische Bewegung des Verriegelungselements 4 zwischen der Verriegelungsstellung und der Entriegelungsstellung erfolgt entlang einer ersten Achse 14. Das Sicherungselement 2 ist um eine zweite Achse 16 drehbar angeordnet und zu der zweiten Achse 16 rotations-asymmetrisch gebildet. Das Sicherungselement 2 wird um die zweite Achse 16 gedreht, um es von der Sicherungsstellung in eine Freigabestellung zu versetzen, die in Bezug auf Fig. 2 noch näher erläutert wird. Die zweite Achse 16 ist orthogonal zu der ersten Achse 14, kann jedoch auch unter einem anderen Winkel zur ersten Achse 14 verlaufen.

Im gezeigten Beispiel ist das Verriegelungselement 4 von dem Sicherungselement 2 beabstandet. Die beiden Elemente 2, 4 stehen also nicht in Kontakt. Wird jedoch versucht, das Verriegelungselement 4 entlang der ersten Achse 14 in die Entriegelungsstellung zu bewegen, so kommt es zu einem Kontakt zwischen den beiden Elementen 2 und 4. Dieser direkte Kontakt blockiert ein weiteres Verschieben des Verriegelungselements 4 in Richtung der Entriegelungsstellung.

Die Elemente 2 und 4 sind so ausgebildet, dass bei dem Kontakt zwischen dem Sicherungselement 2 und dem Verriegelungselement 4 keine vollständige bzw. mehrdimensional formschlüssige Verbindung gebildet wird. Man kann sagen, das bei dem Kontakt eine in nur der ersten Richtung formschlüssige Verbindung zwischen dem Sicherungselement 2 und dem Verriegelungselement 4 gebildet wird, sodass die Bewegung des Verriegelungselements 4 nur in der ersten Richtung blockiert wird. In anderen Worten stellt das Sicherungselement 2 hierbei ein Auflager für das Verriegelungselement 4 bereit, wobei das Auflager die Blockierung der Bewegung des Verriegelungselements 4 von der Verriegelungsstellung in die Entriegelungsstellung bewirkt. Dieses Auflager ist im gezeigten Fall ein linien- oder punktförmiges Loslager. Es kann auch ein flächenförmiges Loslager sein. Auch hierdurch kann sichergestellt werden, dass das Verriegelungselement 4 nicht in die Entriegelungsstellung versetzt werden kann, solange sich das Sicherungselement 2 in der Sicherungsstellung befindet. Gleichzeitig kann gewährleistet werden, dass sich das Verriegelungselement 4 in von der ersten Richtung verschiedenen Richtungen (z.B. in die entgegengesetzte Richtung) bewegen kann.

Wie in Fig. 1 angedeutet, ist das Auflager bzw. die prognostizierte Kontaktposition der Elemente 2, 4 gegenüber der zweiten Achse 16 in einer dritten Richtung 18 beabstandet. Die dritte Richtung 18 verläuft gegenüber der ersten Achse 14 unter einem Winkel 20. Dieser Winkel 20 ist in Fig. 1 zur besseren Übersichtlichkeit gegenüber einer parallel zur ersten Achse 14 verlaufenden, die Achse 16 schneidenden Hilfsachse 22 eingezeichnet. Der Winkel 20 ist ein spitzer Winkel und liegt vorzugsweise in einem Bereich von 15° bis 75°, insbesondere 30° bis 60°. Im gezeigten Beispiel beträgt der Winkel 20 in etwa 45°. Hierdurch kann eine zuverlässige Blockierung der Bewegung des Verriegelungselements 4 sichergestellt werden.

Fig. 2 zeigt eine schematische Darstellung des Sicherungsmechanismus 100 mit dem Sicherungselement 2 in der Freigabestellung. Im Vergleich mit der Fig. 1 ist zu erkennen, dass das Sicherungselement 2 in der Fig. 2 im Uhrzeigersinn um die zweite Achse 16 aus der Sicherungsstellung in die Freigabestellung gedreht wurde. Der Drehbetrag entspricht in diesem Beispiel dem Winkel 20, also 45°. In der Freigabestellung gestattet das Sicherungselement 2 sämtliche Bewegungen des Verriegelungselements 4, insbesondere die Translation aus der Verriegelungsstellung in die Entriegelungsstellung (in Fig. 2 nach links hin). Es ist hierzu noch anzumerken, dass das mit dem Bezugszeichen 24 versehene Bauteil perspektivisch gesehen vor dem Verriegelungssystem 6 liegt und keine Blockierung des Verriegelungselements 4 bewirkt.

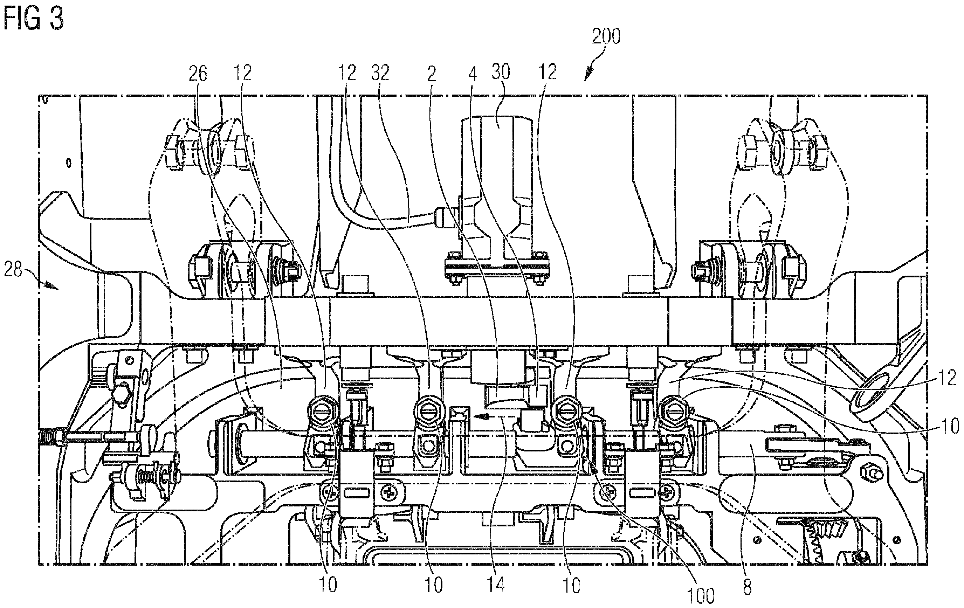

Fig. 3 zeigt eine schematische Darstellung eines Türsystems 200. Das Türsystem 200 umfasst eine Fahrzeugtür 26, einen Türrahmen 28 und den Sicherungsmechanismus 100. Das Verriegelungssystem 6 ist an der Tür 26 angeordnet. Der Türrahmen 28 kann Teil eines Rumpfs eines Fahrzeugs sein oder in den Rumpf des Fahrzeugs einbaubar oder eingebaut sein. Insbesondere kann der Türrahmen 28 durch den Fahrzeugrumpf gebildet werden.

Der Sicherungsmechanismus umfasst einen Aktuator 30, der dazu eingerichtet ist, das Sicherungselement 2 aus der Freigabestellung in die Sicherungsstellung oder/und aus der Sicherungsstellung in die Freigabestellung zu bewegen. Der Aktuator 30 ist beispielsweise kabelgebunden und wird elektrisch oder hydraulisch betrieben. Hierzu kann ein Anschlusskabel 32 mit dem Aktuator verbunden sein. Der Aktuator 30 ist an dem Türrahmen 28 angeordnet und das Sicherungselement 2 ebenso. Bei dieser Ausgestaltung muss das Kabel 32 nicht von der Rumpfseite zur Tür 26 geführt werden, da der Aktuator 30 am Türrahmen 28 befestigt ist. Insbesondere können der Aktuator 30 und das Sicherungselement im Bereich eines Türsturzes des Türrahmens 28 angeordnet sein. Im in der Fig. 3 gezeigten Zustand befindet sich das Sicherungselement 2 in der Freigabestellung.

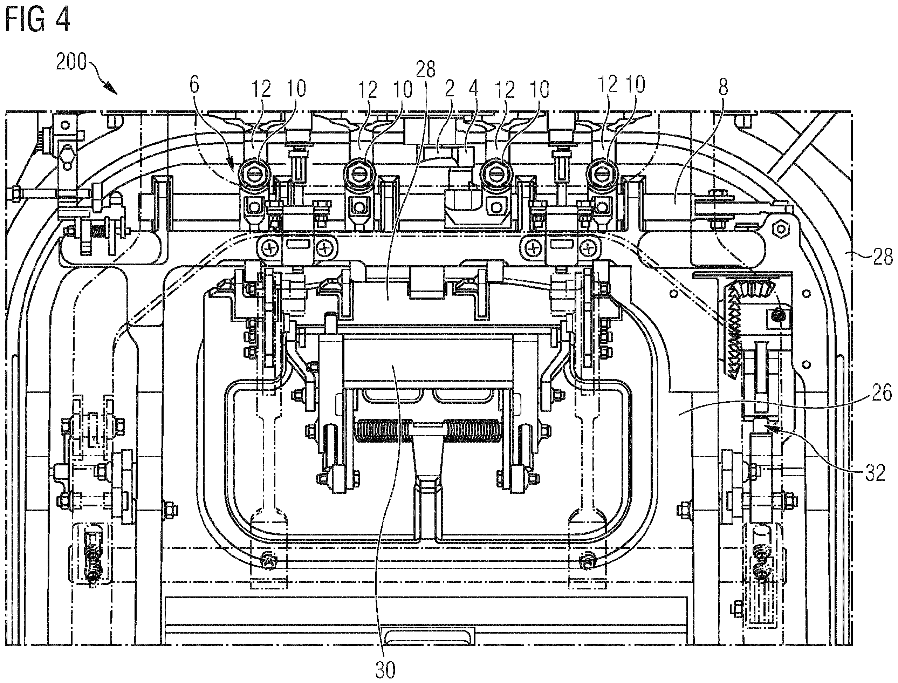

Fig. 4 zeigt eine schematische Darstellung des Türsystems 200 in einem ersten Zustand. Die Tür 26 kann hierbei eine Druckausgleichsklappe 28 umfassen, die mit einem Handgriff 30 verbunden ist. Der Handgriff 30 dient dem Öffnen der Druckausgleichsklappe 28 und ist in dem gezeigten Beispiel über einen Kopplungsmechanismus 32 mit dem Verriegelungssystem 6 verbunden. Der Kopplungsmechanismus 32 ist dazu eingerichtet, eine Bewegung des Handgriffs 30 in eine Translation des Verriegelungselements 4 zu übersetzen, sodass bei einem Betätigen des Handgriffst 30 (in Fig. 4 nach unten hin) das Verriegelungselement 4 von der Verriegelungsstellung in die Entriegelungsstellung bewegt wird (in Fig. 4 nach links hin). In dem dargestellten ersten Zustand wurde der Handgriff 30 noch nicht betätigt und das Verriegelungselement 4 befindet sich in der Verriegelungsstellung. Die Verschlusselemente 10 liegen vor den Verschlussgegenstücken 12, wodurch ein Öffnen der Tür (in Fig. 4 in die Bildebene hinein) verhindert wird. Die Tür 26 ist im ersten Zustand des Türsystems 200 also verriegelt, obwohl sich das Sicherungselement in der Freigabestellung befindet.

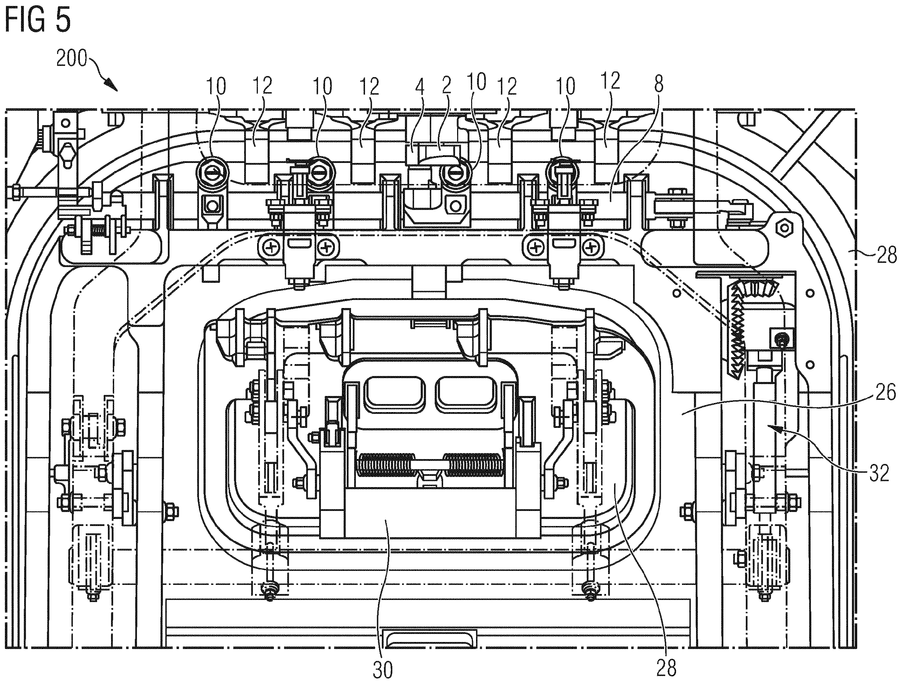

Fig. 5 zeigt eine schematische Darstellung des Türsystems in einem zweiten Zustand. Auch hier befindet sich das Sicherungselement 2 in der Freigabestellung. Es ist zu erkennen, dass der Handgriff 30 gegenüber der Fig. 4 nach unten bewegt wurde. Hierdurch wurde die Druckausgleichsklappe 28 geöffnet und das Verriegelungselement 4 entlang der Achse 14 in die Entriegelungsstellung verschoben (nach links hin). Nun liegen die Verschlusselemente 10 nicht mehr vor den Verschlussgegenstücken 12, sodass ein Öffnen der Tür möglich ist. Die Tür 26 ist dem gezeigten zweiten Zustand des Türsystems also entriegelt.

Es versteht sich, dass der gesamte Sicherungsmechanismus 100 auch an oder in der Tür 26 angeordnet sein kann. In diesem Fall wären insbesondere der Aktuator 30 und das Sicherungselement 2 an der Tür 26 angeordnet bzw. befestigt, ebenso wie das Verriegelungssystem 6.

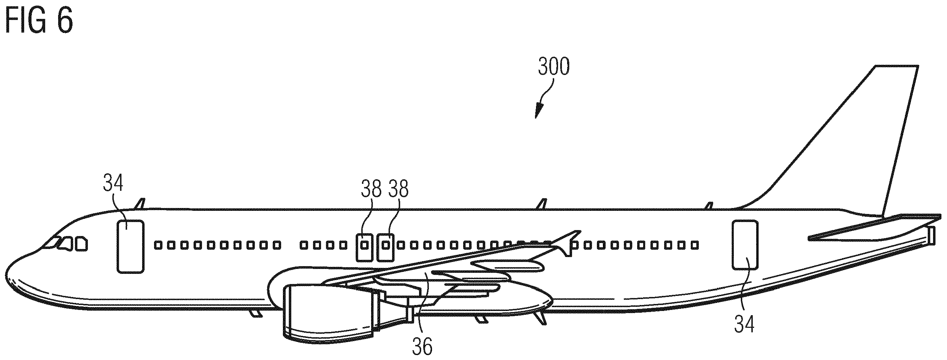

Fig. 6 zeigt eine schematische Darstellung eines Flugzeugs 300. Das Flugzeug umfasst am vorderen Ende und am hinteren Ende jeweils eine Passagiertüre 34. Oberhalb der Tragflächen 36 sind Notausgangstüren 38 vorgesehen. Das Sicherungssystem 100 bzw. das Türsystem 200 kann für eine oder mehrere der Türen 36, 38 eingesetzt werden.

Gemäß der vorliegenden Offenbarung kann das Sicherungselement 2 von dem Verriegelungselement 4 mechanisch entkoppelt sein, und dies sowohl in der Sicherungsstellung, als auch in der Freigabestellung des Sicherungselements 2. Auch der klein dimensionierte Kontakt der beiden Elemente 2 und 4 als Loslager kann einen Verschließ minimieren. Ferner kann durch die beschriebene Ausgestaltung ein sehr zuverlässiger Sicherungsmechanismus 100 nach Art eines FLA bereitgestellt werden. Der Sicherungsmechanismus 100 erlaubt eine separate Anordnung von Aktuator 30 und Verriegelungssystem 6, zum Beispiel eine Positionierung des Aktuators 30 am Rumpf des Flugzeugs 300. So kann Montageaufwand und Kabelverschleiß minimiert werden. Auch wird in diesem Fall keine Kabelführung von der Rumpfseide des Fahrzeugs 300 zu einem an der Tür 26 angeordneten Aktuator 30 benötigt. So können weitere Montagekosten und auch Gewicht eingespart werden.

Es sind selbstverständlich noch weitere Vorteile der hierin beschriebenen Erfindung möglich.

## Patentansprüche

1. Türsystem (200), umfassend:
(i) einen Sicherungsmechanismus (100) zur Sicherung einer Fahrzeugtür (26), wobei der Sicherungsmechanismus (100) umfasst:
ein Verriegelungssystem (6), welches ein Verriegelungselement (4) umfasst und dazu eingerichtet ist, in einer Verriegelungsstellung des Verriegelungselements (4) die Fahrzeugtür (26) in einer Schließstellung zu verriegeln und in einer Entriegelungsstellung des Verriegelungselements die Fahrzeugtür (26) zu entriegeln;
ein Sicherungselement (2), welches dazu eingerichtet ist, in einer Sicherungsstellung eine Bewegung des Verriegelungselements (4) von der Verriegelungsstellung in die Entriegelungsstellung in einer ersten Richtung zu blockieren, und in einer Freigabestellung die Bewegung des Verriegelungselements (4) von der Verriegelungsstellung in die Entriegelungsstellung in der ersten Richtung freizugeben; und
einen Aktuator (30), der dazu eingerichtet ist, das Sicherungselement (2) aus der Freigabestellung in die Sicherungsstellung oder/und aus der Sicherungsstellung in die Freigabestellung zu bewegen,
wobei das Sicherungselement (2) ferner dazu eingerichtet ist, in der Sicherungsstellung eine Bewegung des Verriegelungselements (4) in einer zweiten Richtung freizugeben;
(ii) eine Fahrzeugtür (26); und
(iii) einen Türrahmen (28),
**dadurch gekennzeichnet, dass** das Verriegelungssystem (6) an der Tür (26) angeordnet ist und dass der Aktuator (30) und das Sicherungselement (2) an dem Türrahmen (28) angeordnet sind.

2. Türsystem (200) nach Anspruch 1, wobei das Sicherungselement (2) dazu eingerichtet ist, in der Sicherungsstellung bei der Bewegung des Verriegelungselements (4) von der Verriegelungsstellung in die Entriegelungsstellung mit dem Verriegelungselement (4) in Kontakt zu treten, und mittels des Kontakts zwischen dem Sicherungselement (2) und dem Verriegelungselement (4) die Bewegung des Verriegelungselements (4) von der Verriegelungsstellung in die Entriegelungsstellung zu blockieren.

3. Türsystem (200) nach Anspruch 2, derart ausgelegt, dass bei dem Kontakt zwischen dem Sicherungselement (2) und dem Verriegelungselement (4) eine in nur der ersten Richtung formschlüssige Verbindung zwischen dem Sicherungselement (2) und dem Verriegelungselement (4) gebildet wird.

4. Türsystem (200) nach Anspruch 2 oder 3, derart ausgelegt, dass das Sicherungselement (2) in der Sicherungsstellung bei dem Kontakt mit dem Verriegelungselement (4) ein Auflager für das Verriegelungselement (4) bereitstellt, wobei das Auflager die Blockierung der Bewegung des Verriegelungselements (4) von der Verriegelungsstellung in die Entriegelungsstellung bewirkt.

5. Türsystem (200) nach Anspruch 4, wobei das Auflager ein Loslager ist.

6. Türsystem (200) nach Anspruch 4 oder 5, wobei das Auflager im Wesentlichen linien- oder punktförmig ist.

7. Türsystem (200) nach einem der Ansprüche 1 bis 6, derart eingerichtet, dass das Sicherungselement (4) in der Sicherungsstellung von dem Verriegelungselement (2) beabstandet ist, wenn sich das Verriegelungselement (4) in der Verriegelungsstellung befindet.

8. Türsystem (200) nach einem der Ansprüche 1 bis 7, derart eingerichtet, dass die Bewegung des Verriegelungselements (4) von der Verriegelungsstellung in die Entriegelungsstellung eine Translation des Verriegelungselements (4) entlang einer ersten Achse (14) umfasst oder ist.

9. Türsystem (200) nach einem der Ansprüche 1 bis 8, derart eingerichtet, dass eine Bewegung des Sicherungselements (4) aus der Freigabestellung in die Sicherungsstellung eine Rotation des Sicherungselements (4) um eine zweite Achse (16) umfasst oder ist.

10. Türsystem (200) nach den Ansprüchen 8 und 9, wobei die erste Achse (14) gegenüber der zweiten Achse (16) schräg verläuft.

11. Türsystem (200) nach Anspruch 10 sofern abhängig von Anspruch 4, derart eingerichtet, dass das Auflager gegenüber der zweiten Achse (16) in einer dritten Richtung (18) beabstandet ist, wobei die dritte Richtung (18) gegenüber der ersten Achse (14) oder/und der zweiten Achse (16) schräg verläuft.

12. Türsystem (200) nach Anspruch 11, derart eingerichtet, dass die dritte Richtung gegenüber der ersten Achse (14) unter einem Winkel (20) verläuft, und dass das Sicherungselement (4) bei der Rotation um die zweite Achse (16) im Wesentlichen um den Winkel (20) rotiert.

13. Fahrzeug (300), insbesondere Flugzeug, umfassend das Türsystem (200) nacheinem der Ansprüche 1 bis 12.

## Claims

1. Door system (200), comprising:
(i) a securing mechanism (100) for securing a vehicle door (26), wherein the securing mechanism (100) comprises:
a locking system (6) which comprises a locking element (4) and which is configured, in a locking position of the locking element (4), to lock the vehicle door (26) in a closed position and, in an unlocking position of the locking element, to unlock the vehicle door (26);
a securing element (2) which is configured, in a securing position, to block a movement of the locking element (4) from the locking position into the unlocking position in a first direction and, in a release position, to release the movement of the locking element (4) from the locking position into the unlocking position in the first direction; and
an actuator (30) which is configured to move the securing element (2) from the release position into the securing position and/or from the securing position into the release position,
wherein the securing element (2) is further configured, in the securing position, to release a movement of the locking element (4) in a second direction;
(ii) a vehicle door (26); and
(iii) a door frame (28),
**characterized in that** the locking system (6) is arranged on the door (26), and **in that** the actuator (30) and the securing element (2) are arranged on the door frame (28).

2. Door system (200) according to Claim 1, wherein the securing element (2) is configured, in the securing position, during the movement of the locking element (4) from the locking position into the unlocking position, to come into contact with the locking element (4) and, by means of the contact between the securing element (2) and the locking element (4), to block the movement of the locking element (4) from the locking position into the unlocking position.

3. Door system (200) according to Claim 2, configured in such a way that, upon contact between the securing element (2) and the locking element (4), a connection that is positive-locking in only the first direction is formed between the securing element (2) and the locking element (4).

4. Door system (200) according to Claim 2 or 3, configured in such a way that the securing element (2), in the securing position, upon contact with the locking element (4), provides a support for the locking element (4), wherein the support brings about the blocking of the movement of the locking element (4) from the locking position into the unlocking position.

5. Door system (200) according to Claim 4, wherein the support is a floating bearing.

6. Door system (200) according to Claim 4 or 5, wherein the support is substantially linear or punctiform.

7. Door system (200) according to one of Claims 1 to 6, configured in such a way that the securing element (4), in the securing position, is spaced apart from the locking element (2) when the locking element (4) is located in the locking position.

8. Door system (200) according to one of Claims 1 to 7, configured in such a way that the movement of the locking element (4) from the locking position into the unlocking position involves or is a translation of the locking element (4) along a first axis (14).

9. Door system (200) according to one of Claims 1 to 8, configured in such a way that a movement of the securing element (4) from the release position into the securing position involves or is a rotation of the securing element (4) about a second axis (16).

10. Door system (200) according to Claims 8 and 9, wherein the first axis (14) extends obliquely with respect to the second axis (16).

11. Door system (200) according to Claim 10 when dependent on Claim 4, configured in such a way that the support is spaced apart with respect to the second axis (16) in a third direction (18), wherein the third direction (18) extends obliquely with respect to the first axis (14) and/or the second axis (16).

12. Door system (200) according to Claim 11, configured in such a way that the third direction extends at an angle (20) with respect to the first axis (14), and in that the securing element (4), during the rotation about the second axis (16), rotates substantially through the angle (20).

13. Vehicle (300), in particular an aircraft, comprising the door system (200) according to one of Claims 1 to 12.

## Revendications

1. Système de porte (200), comprenant:
(i) un mécanisme de sécurité (100) pour sécuriser une porte de véhicule (26), le mécanisme de sécurité (100) comprenant:
un système de verrouillage (6) qui comprend un élément de verrouillage (4) et qui est adapté pour verrouiller la porte de véhicule (26) dans une position de fermeture lorsque l'élément de verrouillage (4) est dans une position de verrouillage et pour déverrouiller la porte de véhicule (26) lorsque l'élément de verrouillage est dans une position de déverrouillage;
un élément de sécurité (2) qui est adapté pour bloquer, dans une position de sécurité, un mouvement de l'élément de verrouillage (4) de la position de verrouillage à la position de déverrouillage dans une première direction,
et pour libérer, dans une position de libération, le mouvement de l'élément de verrouillage (4) de la position de verrouillage à la position de déverrouillage dans la première direction; et
un actionneur (30) qui est adapté pour déplacer l'élément de sécurité (2) de la position de libération à la position de sécurité ou/et de la position de sécurité à la position de libération,
l'élément de sécurité (2) étant en outre adapté pour libérer, dans la position de sécurité, un mouvement de l'élément de verrouillage (4) dans une deuxième direction;
(ii) une porte de véhicule (26); et
(iii) un cadre de porte (28),
**caractérisé en ce que** le système de verrouillage (6) est agencé sur la porte (26) et **en ce que** l'actionneur (30) et l'élément de sécurité (2) sont agencés sur le cadre de porte (28).

2. Système de porte (200) selon la revendication 1, dans lequel l'élément de sécurité (2) est adapté pour entrer en contact avec l'élément de verrouillage (4) dans la position de sécurité lors du mouvement de l'élément de verrouillage (4) de la position de verrouillage à la position de déverrouillage, et pour bloquer, au moyen du contact entre l'élément de sécurité (2) et l'élément de verrouillage (4), le mouvement de l'élément de verrouillage (4) de la position de verrouillage à la position de déverrouillage.

3. Système de porte (200) selon la revendication 2, conçu de telle sorte que, lors du contact entre l'élément de sécurité (2) et l'élément de verrouillage (4), une liaison par complémentarité de forme est formée entre l'élément de sécurité (2) et l'élément de verrouillage (4) uniquement dans la première direction.

4. Système de porte (200) selon la revendication 2 ou 3, conçu de telle sorte que, dans la position de sécurité, l'élément de sécurité (2) fournit un support pour l'élément de verrouillage (4) lors du contact avec l'élément de verrouillage (4), le support provoquant le blocage du mouvement de l'élément de verrouillage (4) de la position de verrouillage à la position de déverrouillage.

5. Système de porte (200) selon la revendication 4, dans lequel le support est un palier libre.

6. Système de porte (200) selon la revendication 4 ou 5, dans lequel le support est essentiellement linéaire ou ponctuel.

7. Système de porte (200) selon l'une quelconque des revendications 1 à 6, adapté de telle sorte que l'élément de sécurité (4) est espacé de l'élément de verrouillage (2) dans la position de sécurité lorsque l'élément de verrouillage (4) se trouve dans la position de verrouillage.

8. Système de porte (200) selon l'une quelconque des revendications 1 à 7, adapté de telle sorte que le mouvement de l'élément de verrouillage (4) de la position de verrouillage à la position de déverrouillage comprend ou est une translation de l'élément de verrouillage (4) le long d'un premier axe (14).

9. Système de porte (200) selon l'une quelconque des revendications 1 à 8, adapté de telle sorte qu'un mouvement de l'élément de sécurité (4) de la position de libération à la position de sécurité comprend ou est une rotation de l'élément de sécurité (4) autour d'un deuxième axe (16).

10. Système de porte (200) selon les revendications 8 et 9, dans lequel le premier axe (14) est incliné par rapport au deuxième axe (16).

11. Système de porte (200) selon la revendication 10, dans la mesure où elle dépend de la revendication 4, adapté de telle sorte que le support est espacé du deuxième axe (16) dans une troisième direction (18), la troisième direction (18) étant inclinée par rapport au premier axe (14) ou/et au deuxième axe (16).

12. Système de porte (200) selon la revendication 11, adapté de telle sorte que la troisième direction s'étend selon un angle (20) par rapport au premier axe (14), et que l'élément de sécurité (4) tourne essentiellement de l'angle (20) lors de la rotation autour du deuxième axe (16).

13. Véhicule (300), notamment aéronef, comprenant le système de porte (200) selon l'une quelconque des revendications 1 à 12.
